# EUROPÄISCHE PATENTSCHRIFT

(11) **EP 4 073 377 B1**
(45) Veröffentlichungstag und Bekanntmachung des Hinweises auf die Patenterteilung: **24.06.2026**
(21) Anmeldenummer: 20820997.3
(22) Anmeldetag: 11.12.2020
(51) Int. Cl.: F03D 15/20, F03D 80/50, F03D 80/70, H02K 5/16, H02K 7/18

(54) **DIREKTANGETRIEBENE WINDKRAFTANLAGE UND VERFAHREN ZUM DEMONTIEREN EINES GENERATORS EINER DIREKTANGETRIEBENEN WINDKRAFTANLAGE**
DIRECTLY DRIVEN WIND TURBINE AND METHOD FOR DISASSEMBLING A GENERATOR OF A DIRECTLY DRIVEN WIND TURBINE
ÉOLIENNE À ENTRAÎNEMENT DIRECT ET PROCÉDÉ DE DÉMONTAGE D'UN GÉNÉRATEUR D'UNE ÉOLIENNE À ENTRAÎNEMENT DIRECT

(30) Priorität: 12.12.2019 EP 19215709
(43) Veröffentlichungstag der Anmeldung: 19.10.2022
(73) Patentinhaber: Wepfer Technics AG, 8450 Andelfingen (CH)
(72) Erfinder: WEPFER, Hans, 8471 Berg-Dägerlen (CH)
(74) Vertreter: Keller Schneider Patent- und Markenanwälte AG
(86) Internationale Anmeldenummer: PCT/EP2020/085790
(87) Internationale Veröffentlichungsnummer: WO 2021/116425

(56) Entgegenhaltungen:
- EP-A1- 2 463 510
- US-A- 5 844 341
- US-A1- 2008 309 086
- US-A1- 2010 253 087
- US-A1- 2013 221 677

## Beschreibung

### Technisches Gebiet

Die Erfindung betrifft eine direktangetriebene Windkraftanlage. Ferner betrifft die Erfindung ein Verfahren zum Demontieren eines Generators von einer Hauptwelle einer direktangetriebenen Windkraftanlage.

### Stand der Technik

Windenergie oder Windkraft wird schon seit Langem als Energiequelle genutzt. Dabei gilt Windenergie aufgrund ihrer weltweiten Verfügbarkeit, ihrer niedrigen Kosten sowie ihres technologischen Entwicklungsstandes als eine der vielversprechendsten regenerativen Energiequellen.

Gerade im Zuge der Klimadebatte gewinnt Windenergie als erneuerbare Energiequelle zusätzlich an Bedeutung. So gehört Windenergie zu den umweltfreundlichsten, saubersten und sichersten Energieressourcen. Ihre Nutzung wird in der wissenschaftlichen Literatur - auch im Vergleich mit anderen regenerativen Energien - zu den umweltschonendsten Energiegewinnungsformen gezählt.

Die mit Abstand wichtigste Form der Nutzung von Windenergie erfolgt mittels Windkraftanlagen.

Windkraftanlagen oder Windenergieanlagen wandeln die Energie des Windes in elektrische Energie, um sie dann in ein Stromnetz einzuspeisen. Eine Windkraftanlage besteht im Wesentlichen aus einem Rotor mit Nabe und Rotorblättern sowie einer Maschinengondel, die einen Generator und ein Getriebe beherbergt. Die Maschinengondel ist auf einem Turm montiert und der Generator ist über eine Hauptwelle mit dem Rotor verbunden.

In letzter Zeit ist ein Trend dahingehend zu erkennen, dass immer mehr Hersteller bei den Windkraftanlagen auf ein getriebeloses Design zurückgreifen. Bei diesen sogenannten direktangetriebenen Windkraftanlagen wird auf die Verwendung eines Getriebes verzichtet. Der Generator wird dort direkt mit der Drehzahl des Windkraftanlagen-Rotors betrieben.

Aus der EP 2 816 225 B1 ist eine solche direktangetriebene Windkraftanlage bekannt. Die Windkraftanlage weist einen Generator auf, der einen Aussenrotor mit einem äusseren Ringkörper und einen Innenstator aufweist. An verschiedenen äusseren Umfangsteilen des äusseren Ringkörpers ist eine Vielzahl von Schaufeltragstrukturen angeordnet, die mit Schaufelfüssen von Turbinenschaufeln verbunden sind. Eine horizontale Welle ist mit dem Aussenrotor so verbunden, dass sich der Aussenrotor um den Innenstator dreht. Die aus der EP 2 816 225 B1 bekannte Windkraftanlage weist ferner eine Gondel auf, die an einem oberen Teil eines Turms montiert ist und einen Wellenträgermechanismus zum Tragen der horizontalen Welle aufnimmt. Ausserdem erfolgt direkt an den Turbinenschaufeln eine Pitchverstellung.

Bei den bekannten Windkraftanlagen, wie sie beispielsweise auch aus der EP 2 816 225 B1 bekannt sind, besteht ein Problem dahingehend, dass diese über einen komplizierten Aufbau verfügen. Dieser führt zunächst dazu, dass es allgemein aufwendig ist, die bekannten Windkraftanlagen zu bauen und zu montieren. Es entstehen dort folglich bereits hohe Herstellungs- und Montagekosten. Ausserdem ist durch den komplizierten Aufbau eine Wartung und Instandhaltung nur erschwert möglich und mit einem erhöhten Aufwand verbunden. Somit entstehen bei den bekannten Windkraftanlagen zusätzlich zu den hohen Herstellungskosten auch hohe Folgekosten.

Weitere Gattungsgemässe Windkraftanlagen sind aus der EP 2 463 510 A1 und aus der US 2013/221677 A1 bekannt.

Ausgehend hiervon wäre daher eine Windkraftanlage wünschenswert, die über einen kompakteren Aufbau verfügt und so vereinfacht herzustellen und zu montieren ist. Gleichzeitig wäre eine Gestaltung wünschenswert, die eine einfachere Wartung und Instandhaltung ermöglicht. Der Aufbau der Windkraftanlage hängt bei direktangetriebenen Windkraftanlagen insbesondere auch stark von dem Aufbau und der Umsetzung des Generators ab, so dass es hier ferner wünschenswert wäre, diesen so zu gestalten, dass er die oben erwähnten Aspekte ermöglicht und unterstützt.

### 1 Darstellung der Erfindung

Der Erfindung liegt daher die Aufgabe zugrunde, eine direktangetriebene Windkraftanlage anzugeben, die eine vereinfachte Herstellung, Montage, Wartung und Instandhaltung ermöglicht.

Die erfindungsgemässe Lösung besteht darin, eine direktangetriebene Windkraftanlage gemäß Anspruch 1 anzugeben, die dazu ausgebildet ist, Bewegungsenergie einer Hauptwelle der Windkraftanlage in elektrische Energie umzuwandeln, wobei der Generator einen mit der Hauptwelle der Windkraftanlage verbindbaren Generatorrotor und einen Generatorstator aufweist, wobei der Generator ein Generatorgehäuse aufweist, an dem der Generatorstator

angeordnet ist, wobei das Generatorgehäuse eine Vorderseite, die in einem eingebauten Zustand des Generators zu einem Rotorkopf der Windkraftanlage hin zeigt, und eine Rückseite aufweist, die in dem eingebauten Zustand des Generators von dem Rotorkopf weg zeigt, wobei der Generator ferner zumindest ein vorderes Generatorlager, das an der Vorderseite des Generatorgehäuses angeordnet ist, und ein hinteres Generatorlager aufweist, das an der Rückseite des Generatorgehäuses angeordnet ist, wobei das vordere und das hintere Generatorlager dazu ausgebildet sind, die Hauptwelle in dem eingebauten Zustand des Generators an dem Generatorgehäuse zu lagern, wobei der Generator mindestens eine Auflagereinrichtung aufweist, die dazu ausgebildet ist, das Generatorgehäuse in einem eingebauten Zustand an einem Gehäuse der Windkraftanlage abzustützen.

Als direktangetriebene Windkraftanlagen werden hier getriebelose Anlagen bezeichnet. Bei der Windkraftanlage handelt es sich vorzugweise um eine Windkraftanlage mit zumindest im Wesentlichen horizontaler Achse. Hierbei ist entsprechend auch die Hauptwelle zumindest im Wesentlichen horizontal angeordnet. Die Hauptwelle ist die Rotorwelle der Windkraftanlage, die mittels der Rotorblätter in Rotation versetzt wird.

Alternativ kann es sich auch um eine Windkraftanlage handeln, die eine vertikal stehende Rotorachse aufweist. Hierbei ist entsprechend auch die Hauptwelle zumindest im Wesentlichen vertikal angeordnet.

Der Generator kann in dem in der Windkraftanlage eingebauten Zustand die Rotationsenergie der Hauptwelle in elektrische Energie umwandeln. Hierfür weist der Generator den Generatorrotor und den Generatorstator auf. Der Generatorrotor ist ein sich drehender (rotierender) Teil des Generators. Der Generatorstator ist ein feststehender Teil des Generators. Durch das von dem Generatorrotor beispielsweise mit einem Dauermagneten oder einem Elektromagneten erzeugte, umlaufende magnetische Gleichfeld wird in den Leitern oder Leiterwicklungen des Generatorstators durch die Lorentzkraft elektrische Spannung induziert.

Der Generatorstator ist an dem Generatorgehäuse angeordnet. Bei dem Generatorgehäuse und dem Generatorstator kann es sich um ein einheitliches Bauteil handeln, so dass der Stator gleichzeitig als Generatorgehäuse ausgebildet ist. Alternativ hierzu ist der Generatorstator ein separates Bauteil, das von dem Generatorgehäuse gehalten wird.

Die Vorderseite und die Rückseite des Generatorgehäuses beziehen sich auf den in der Windkraftanlage eingebauten Zustand des Generators. Dabei wird die Seite als Vorderseite bezeichnet, die zu dem Rotor der Windkraftanlage hin ausgerichtet ist. Allerdings kann der Generator derart symmetrisch ausgebildet sein, dass dieser von beiden Seiten auf die Hauptwelle aufgesetzt werden kann. Entsprechend lässt sich die Vorderseite allgemeiner als eine erste Seite des Generators und die entgegengesetzte Seite (Rückseite) als eine zweite Seite des Generators bezeichnen.

Das Gleiche gilt auch für sämtliche weitere Bauteile, bei denen ein vorderes Bauteil und ein hinteres Bauteil angegeben sind. Derartige Angaben beziehen sich immer auf einen in der Windkraftanlage eingebauten Zustand und können in der Beschreibung durchweg durch erstes bzw. zweites Bauteil ersetzt werden.

Entsprechend könnte beispielweise das vordere Generatorlager auch als erstes Generatorlager und das hintere Generatorlager auch als zweites Generatorlager bezeichnet werden.

Zwischen dem vorderen Generatorlager und dem hinteren Generatorlager befindet sich ein Bereich, in dem sich der Generatorrotor radial nach aussen erstreckt.

Die zumindest eine Auflagereinrichtung ist so ausgebildet, dass diese Biegemomente der Hauptwelle in dem montierten Zustand ableiten kann. Insbesondere leitet die Auflagereinrichtung Momente und Kräfte dann in das Gehäuse der Windkraftanlage.

Mit der erfindungsgemäßen Windkraftanlage wird die Aufgabe in zufriedenstellender Weise gelöst.

Insbesondere ermöglicht der oben beschriebene Aufbau des Generators einen besonders kompakten Aufbau der Windkraftanlage. Dieser kompakte Aufbau wird durch die folgenden Weiterbildungen erweitert und verbessert.

Erfindungsgemäss sind das vordere und das hintere Generatorlager als Loslager ausgebildet.

Die Loslager übertragen hier nur radiale Kräfte. Das bedeutet, dass das vordere und das hintere Generatorlager nur radiale Kräfte von der Hauptwelle auf das Generatorgehäuse übertragen. Die beiden Generatorlager sind somit axial, bzw. horizontal verschiebbar und können in dem eingebauten Zustand axiale Längenveränderungen der Hauptwelle aufnehmen bzw. ausgleichen. Derartige axiale Längenveränderungen können beispielsweise wärmebedingt auftreten.

Das vordere und das hintere Generatorlager sind vorzugsweise als Wälzlager ausgebildet. Alternativ hierzu können diese allerdings auch als Gleitlager ausgebildet sein.

Gemäss einer vorteilhaften Weiterbildung der Erfindung weist der Generatorrotor einen hohlzylinderförmigen Basisbereich auf, der eine Innenumfangsfläche und eine Aussenumfangsfläche aufweist.

Mit einem hohlzylinderförmigen Basisbereich kann die Kraftübertragung zwischen Hauptwelle und Generatorrotor auf einer verhältnismässig grossen Fläche erfolgen.

Gemäss einer vorteilhaften Weiterbildung der Erfindung ist der Generatorrotor einteilig mit dem hohlzylinderförmigen Basisbereich ausgebildet.

Dies hat den Vorteil, dass der Generatorrotor direkt, das heisst unmittelbar auf der Hauptwelle angeordnet ist. Ausserdem wird hiermit die Anzahl der Bauteile reduziert und eine besonders stabile Ausbildung des Generators erreicht. Der Generatorrotor weist dann vorzugsweise einen sich von dem Basisbereich radial nach aussen erstreckenden Teil auf. Dieser sich radial nach aussen erstreckende Teil ist in Axialrichtung gesehen besonders bevorzugt zentral an dem hohlzylinderförmigen Basisbereich angeordnet.

Alternativ hierzu kann der Generatorrotor auch zweiteilig ausgebildet sein, wobei der sich radial nach aussen erstreckende Teil dann an dem hohlzylinderförmigen Basisbereich befestigt ist (form-, kraft und/oder stoffschlüssig).

Gemäss einer vorteilhaften Weiterbildung der Erfindung kommen eine Innenumfangsfläche des vorderen Generatorlagers und eine Innenumfangsfläche des hinteren Generatorlagers mit der Aussenumfangsfläche des hohlzylinderförmigen Basisbereichs in Kontakt.

Ferner kommen eine Aussenumfangsfläche des vorderen Generatorlagers und eine Aussenumfangsfläche des hinteren Generatorlagers mit dem Generatorgehäuse in Kontakt.

Übertragen auf ein Wälzlager bedeutet dies, dass ein Innenring des Wälzlagers mit dem hohlzylinderförmigen Basisbereich in Kontakt kommt und ein Außenring des Wälzlagers mit dem Generatorgehäuse in Kontakt kommt.

Das bedeutet insgesamt, dass die Hauptwelle über den Generatorrotor an dem Generatorgehäuse gelagert ist. Das Generatorgehäuse ist wiederum über die zumindest eine Auflagereinrichtung an dem Gehäuse gelagert.

Der Kraftfluss verläuft also von der Hauptwelle auf den Generatorrotor bzw. den Basisbereich des Generatorrotors. Weiter verläuft der Kraftfluss von dem Basisbereich auf das Generatorlager. Weiter verläuft der Kraftfluss von dem Generatorlager auf das Generatorgehäuse. Weiter verläuft der Kraftfluss von dem Generatorgehäuse auf die zumindest eine Auflagereinrichtung. Weiter verläuft der Kraftfluss von der zumindest einen Auflagereinrichtung auf das Gehäuse.

Das bedeutet also, dass die Hauptwelle nicht direkt über die Generatorlager, sondern indirekt über den Generatorrotor bzw. den Basisbereich desselben gelagert ist. Daher ist der Basisbereich des Generatorrotors in Axialrichtung länger ausgebildet als der Abstand zwischen dem vorderen Generatorlager und dem hinteren Generatorlager in Axialrichtung. Insbesondere erstreckt sich der Generatorrotor in Axialrichtung nach vorne (zur Vorderseite) über das vordere Generatorlager hinaus und erstreckt sich in Axialrichtung nach hinten (zur Rückseite) über das hintere Generatorlager hinaus.

Das hat den entscheidenden Vorteil, dass der gesamte Generator als Generatormodul auf die Hauptwelle aufsteckbar ist. Dies bringt einerseits wiederum den Vorteil mit sich, dass der Generatorrotor als Modul zusammengebaut und anschliessend auf die Hauptwelle montiert werden kann. Hier kann also eine modulare Fertigung der Windkraftanlage erfolgen. Andererseits hat dies ferner den Vorteil, dass der Generator einfach (d.h. in wenigen und unkomplizierten Schritten) zu montieren und zu demontieren ist. Hier kann also die Wartung und Instandsetzung vereinfacht werden.

Gemäss einer vorteilhaften Weiterbildung der Erfindung weist der Generator ferner eine vordere Generatorrotor-Befestigungseinrichtung und eine hintere Generatorrotor-Befestigungseinrichtung auf, die an axialen Endbereichen des hohlzylinderförmigen Basisbereichs angeordnet sind.

Die vordere und die hintere Generatorrotor-Befestigungseinrichtung sind dazu ausgebildet, den Generatorrotor in dem montierten Zustand an der Hauptwelle zu befestigen. Dabei ist die vordere Generatorrotor-Befestigungseinrichtung in Axialrichtung vor dem vorderen Generatorlager angeordnet. Die hintere Generatorrotor-Befestigungseinrichtung ist in Axialrichtung hinter dem hinteren Generatorlager angeordnet. Die Generator-Befestigungseinrichtungen erlauben ein sicheres Halten des Generatorrotors an der Hauptwelle.

Gemäss einer vorteilhaften Weiterbildung der Erfindung sind die vordere Generatorrotor-Befestigungseinrichtung und die hintere Generatorrotor-Befestigungseinrichtung als Klemmeinrichtungen ausgebildet.

Wenn die Generatorrotor-Befestigungseinrichtungen als Klemmeinrichtungen ausgebildet sind, sind diese besonders schnell zu montieren und zu demontieren, so dass ein besonders schneller Generatorwechsel erfolgen kann. Vorzugsweise handelt es sich bei den Klemmeinrichtungen um Klemmringe, die diesen Effekt weiter verstärken.

Gemäss einer vorteilhaften Weiterbildung der Erfindung ist die mindestens eine Auflagereinrichtung ein Elastomerlager.

Das Elastomerlager ist besonders gut geeignet, Biegemomente der Hauptwelle aufzunehmen. Der Vorteil des Elastomerlagers liegt hierbei auch darin, dass es als Verformungslager Kräfte durch Verformung des Lagermaterials (hier Elastomer) aufnimmt. Vorzugsweise ist das Elastomer des Elastomerlagers aus einer Naturkautschukmischung hergestellt. Diese ermöglicht ein hochelastisches, alterungs- und ozongeschütztes Elastomerlager.

Gemäss einer vorteilhaften Weiterbildung der Erfindung ist an der Vorderseite des Generatorgehäuses eine vordere Auflagereinrichtung und an der Rückseite des Generatorgehäuses eine hintere Auflagereinrichtung angeordnet.

Gemäss einer vorteilhaften Weiterbildung der Erfindung ist die vordere Auflagereinrichtung über eine vordere Generatorgehäuse-Befestigungseinrichtung mit der Vorderseite des Generatorgehäuses verbunden, wobei die hintere Auflagereinrichtung über eine hintere Generatorgehäuse-Befestigungseinrichtung mit der Rückseite des Generatorgehäuses verbunden ist.

Wenn zwei Auflagereinrichtungen, und zwar eine vordere Auflagereinrichtung und eine hintere Auflagereinrichtung, angeordnet sind, kann eine optimale Verteilung der Kräfte auf das vordere und das hintere Generatorlager erfolgen.

Bei der Hauptwelle handelt es sich vorzugsweise um eine horizontale Hauptwelle. Das bedeutet, dass die Hauptwelle horizontal in der Windkraftanlage verbaut ist. Alternativ kann es sich auch um eine vertikale Hauptwelle handeln. An dem Rotorkopf sind Rotorblätter angeordnet. Der Rotorkopf ist als Nabe ausgebildet und auf die Hauptwelle aufgesetzt.

Bei dem Gehäuse kann es sich um eine Gondel der Windkraftanlage handeln. Vorzugsweise ist das Gehäuse allerdings ein Maschinengehäuse, das in die Gondel eingesetzt wird bzw. ist. Das Gehäuse hat hierbei vorzugsweise eine Käfigstruktur mit zumindest einer Basisplatte.

Mit der erfindungsgemässen Windkraftanlage wird die Aufgabe in zufriedenstellender Weise gelöst. Insbesondere ist es mit dieser möglich, eine vereinfachte Herstellung, Montage, Wartung und Instandhaltung zu erzielen.

Erfindungsgemäss weist die direktangetriebene Windkraftanlage ferner ein vorderes Hauptwellen-Lager auf, das benachbart zu dem Rotorkopf angeordnet ist und dazu ausgebildet ist, die Hauptwelle an dem Gehäuse zu lagern.

Das hintere Hauptwellen-Lager wird, wie im Folgenden noch detaillierter beschrieben, durch den Generator ausgebildet. Insbesondere wird das hintere Hauptlager durch das vordere und hintere Generatorlager ausgebildet, die Kräfte über das Generatorgehäuse und die zumindest eine Auflagereinrichtung ableiten.

Erfindungsgemäss ist das vordere Hauptwellen-Lager als Festlager ausgebildet ist.

Da das vordere Hauptwellen-Lager als Festlager ausgebildet ist, kann dieses Radial- und Axialkräfte aufnehmen. Wenn das vordere Hauptwellen-Lager als Festlager ausgebildet ist, kann das hintere Hauptwellen-Lager als Loslager ausgebildet werden. Das bedeutet, dass das vordere und das hintere Generatorlager als Loslager ausgebildet werden können. Hierdurch ist der konstruktive Aufwand des Generators insgesamt verringert.

Vorzugsweise handelt es sich bei dem vorderen Hauptwellen-Lager um ein Pendelkugellager. Bei einem Pendelkugellager lassen sich Innenring, Käfig und Kugeln um wenige Winkelgrade aus der Mittelstellung schwenken. So können Fluchtfehler oder Durchbiegungen der Welle durch das Pendellager ausgeglichen werden.

Erfindungsgemäss bilden das vordere und das hintere Generatorlager gemeinsam ein hinteres Hauptwellen-Lager aus.

Dies hat den Vorteil, dass kein zusätzliches hinteres Hauptwellen-Lager erforderlich ist. Der Generator (bzw. die Generatorlager) hat somit auch die Aufgabe, die Hauptwelle zu lagern. Da mehrere Funktionen von einem Bauteil erfüllt werden, kann die Anzahl der Bauteile reduziert werden. Das reduziert wiederum die Gesamtkomplexität des Systems bzw. der Windkraftanlage.

Gemäss einer vorteilhaften Weiterbildung der Erfindung weist die Windkraftanlage ferner eine Hauptwellen-Halterung auf, die dazu ausgebildet ist, die Hauptwelle in ihrer Position zu halten, wenn der Generator demontiert wird.

Wenn der Generator von der Hauptwelle demontiert wird, ist die Hauptwelle an einem hinteren Bereich der Windkraftanlage zunächst nicht mehr gelagert. Die Hauptwelle wird also an einem hinteren Bereich nicht mehr gehalten. Durch das Gewicht des Rotorkopfes, der Rotorblätter etc. an einem vorderen Bereich der Hauptwelle wird die Hauptwelle vorne nach unten gedrückt. Entsprechend wird der hintere Bereich der Hauptwelle nach oben gedrückt. Die Hauptwellen-Halterung dient nun dazu, den hinteren Bereich der Hauptwelle zu halten, also nach unten zu drücken.

Vorzugsweise ist die Hauptwellen-Halterung benachbart zu dem Generator bzw. einer Einbauposition des Generators angeordnet. Hier kann die Hauptwellen-Halterung mit einem verhältnismässig grossen Hebel auf die Hauptwelle wirken.

Gemäss einer vorteilhaften Weiterbildung der Erfindung ist die Hauptwelle als Hohlwelle ausgebildet.

Dies hat zunächst den Vorteil, dass Kabel und ähnliche Elemente, die von einem vorderen Bereich der Windkraftanlage zu einem hinteren Bereich der Windkraftanlage geführt werden sollen, durch die Hauptwelle gelegt werden können. Hierdurch sind diese einerseits geschützt angeordnet und andererseits auch platzsparend verstaut.

Gemäss einer vorteilhaften Weiterbildung der Erfindung weist die Windkraftanlage eine Pitcheinrichtung auf.

Als Pitch wird hierbei die Neigung bzw. der Neigungswinkel der Rotorblätter verstanden. Mittels einer Pitcheinrichtung ist es möglich, den Pitch zu verändern. Dabei kann die Leistung der Windkraftanlage gesteuert oder geregelt werden, um bei wechselnden Windgeschwindigkeiten ihren Wirkungsgrad zu optimieren. Im Einzelnen kann hierdurch eine variable Rotorgeschwindigkeit erreicht werden, so dass der Rotor unterhalb der Nennleistung immer mit der aerodynamisch optimalen Drehzahl betrieben werden kann. Ferner entstehen geringere Belastungen des Generators durch geringere Drehmomentschwankungen und eine niedrigere Schallemissionen durch niedrige Rotordrehzahlen. Zudem können Drehmomentschwankungen dadurch verringert werden, dass der Rotors als Schwungrad während Böen eingesetzt wird.

Gemäss einer vorteilhaften Weiterbildung der Erfindung weist die Pitcheinrichtung einen Pitchzylinder, eine Pitchstange und eine Pitchverstellung auf, wobei die Pitchverstellung benachbart zu dem Rotorkopf angeordnet ist und mittels des Pitchzylinders ansteuerbar ist, (um die Neigung der Rotorblätter zu verändern) und wobei die Pitchstange den Pitchzylinder durch die Hauptwelle hindurch mit der Pitchverstellung verbindet.

Ein Nachteil bei der Verwendung von den bekannten Pitcheinrichtungen liegt insbesondere darin, dass die Windkraftanlage über eine höhere Komplexität gegenüber einfacheren Konstruktionen ohne Pitcheinrichtung verfügt. Ferner muss die Pitcheinrichtung üblicherweise aufwendig an dem Rotorkopf untergebracht werden.

Mit dem oben beschriebenen Aufbau kann dieser Nachteil allerdings reduziert werden. Im Einzelnen kann dieser dadurch reduziert werden, dass die Pitcheinrichtung an mehreren Stellen innerhalb der Windkraftanlage verteilt wird. Insbesondere ist es durch die Hohlwelle möglich, den Pitchzylinder in einem hinteren Bereich der Windkraftanlage anzuordnen und die Pitchverstellung an einem vorderen Bereich der Windkraftanlage anzuordnen. Dabei ist der Pitchzylinder mit der Pitchverstellung über eine Pitchstange verbunden.

Besonders bevorzugt ist die Pitchstange (gleichzeitig) eine Sicherheitseinrichtung, die dazu ausgebildet ist, die Hauptwelle zu halten, wenn diese brechen sollte. Entsprechend dient die Pitchstange auch als Sicherheitseinrichtung, die die Betriebssicherheit der Windkraftanlage erhöht. Hierfür ist die Pitchstange stabil genug dazu ausgebildet, die Hauptwelle zu halten (wenn diese brechen sollte).

Der Erfindung liegt ferner die Aufgabe zugrunde, ein Verfahren zum Demontieren eines Generators anzugeben, das eine vereinfachte Demontage des Generators ermöglich.

Die erfindungsgemässe Lösung besteht hierbei darin, ein Verfahren gemäß Anspruch 14 zum Demontieren eines Generators von einer Hauptwelle einer direktangetriebenen Windkraftanlage anzugeben, das folgende Schritte aufweist: Lösen einer vorderen Generatorrotor-Befestigungseinrichtung und einer hinteren Generatorrotor-Befestigungseinrichtung; Lösen von zumindest einer, vorzugsweise mehrerer, Auflagereinrichtungen; und Herunterschieben des Generators von der Hauptwelle.

Mit dem erfindungsgemässen Verfahren wird die Aufgabe in zufriedenstellender Weise gelöst. Insbesondere ist es mit diesem möglich, eine vereinfachte Demontage zu erreichen, so dass insbesondere Wartung und Instandhaltung vereinfacht werden können.

Wenn die vordere und hintere Generatorrotor-Befestigungseinrichtung und die Auflagereinrichtung(en) gelöst sind, kann der gesamte Generator von der Hauptwelle geschoben werden. Hierdurch ist eine besonders schnelle Demontage des Generators möglich.

Insbesondere wird dies einerseits dadurch ermöglicht, dass eine Innenumfangsfläche des vorderen Generatorlagers und eine Innenumfangsfläche des hinteren Generatorlagers mit der Aussenumfangsfläche des hohlzylinderförmigen Basisbereichs in Kontakt kommen. Andererseits dadurch, dass eine Aussenumfangsfläche des vorderen Generatorlagers und eine Aussenumfangsfläche des hinteren Generatorlagers mit dem Generatorgehäuse in Kontakt kommen. Allgemeiner formuliert bedeutet dies, dass der obige Effekt dadurch erreicht werden kann, dass die Hauptwelle über den Generatorrotor an dem Generatorgehäuse gelagert ist.

Das Verfahren kann ferner - vorzugsweise als einen ersten Schritt - einen Schritt aufweisen, bei dem ein Pitchzylinder der Windkraftanlage entfernt wird.

Analog kann auch ein Verfahren zum Montieren des Generators auf einer Hauptwelle einer direktangetriebenen Windkraftanlage angegeben werden, wobei das Verfahren dann folgende Schritte aufweist: Aufschieben des Generators auf die Hauptwelle; Befestigen von zumindest einer, vorzugsweise mehrerer, Auflagereinrichtungen; und Befestigen einer vorderen Generatorrotor-Befestigungseinrichtung und einer hinteren Generatorrotor-Befestigungseinrichtung.

Gemäss einer vorteilhaften Weiterbildung der Erfindung weist das Verfahren ferner folgenden Schritt auf: Aktivieren einer Hauptwellen-Halterung.

Die Hauptwellen-Halterung kann nach ihrer Aktivierung die Hauptwelle halten, so dass diese sich nach dem Entfernen des Generators nicht unkontrolliert bewegen kann. Die Hauptwellen-Halterung hält die Hauptwelle also bei entferntem Generator in einer vorgegebenen Position (beispielsweise der Ursprungsposition).

Vorzugsweise ist die Hauptwellen-Halterung benachbart zu dem Generator bzw. einer Einbauposition des Generators angeordnet. Hier kann die Hauptwellen-Halterung mit einem verhältnismässig grossen Hebel auf die Hauptwelle wirken.

Das Gehäuse kann ferner vorzugsweise eine Schiene aufweisen, auf der der Generator von der Hauptwelle gezogen werden kann. Die Schiene vereinfacht die Demontage und Montage des Generators an der Windkraftanlage.

Die Erfindung wird nachstehend anhand der Beschreibung von Ausführungsbeispielen unter Bezugnahme auf die beiliegenden Zeichnungen näher erläutert. Dabei ergeben sich aus der nachfolgenden Beschreibung und der Gesamtheit der Patentansprüche weitere vorteilhafte Ausführungsformen und Merkmalskombinationen der Erfindung.

### Kurze Beschreibung der Zeichnungen

Die zur Erläuterung der Ausführungsbeispiele verwendeten Zeichnungen zeigen in:
- Fig. 1: eine schematische Querschnittsansicht einer Windkraftanlage gemäss der vorliegenden Erfindung;
- Fig. 2: eine Seitenansicht einer Windkraftanlage gemäss der vorliegenden Erfindung;
- Fig. 3: eine Ansicht der Windkraftanlage gemäss der vorliegenden Erfindung von einer Vorderseite; und
- Fig. 4: eine Ansicht der Windkraftanlage gemäss der vorliegenden Erfindung von einer Rückseite.

### Wege zur Ausführung der Erfindung

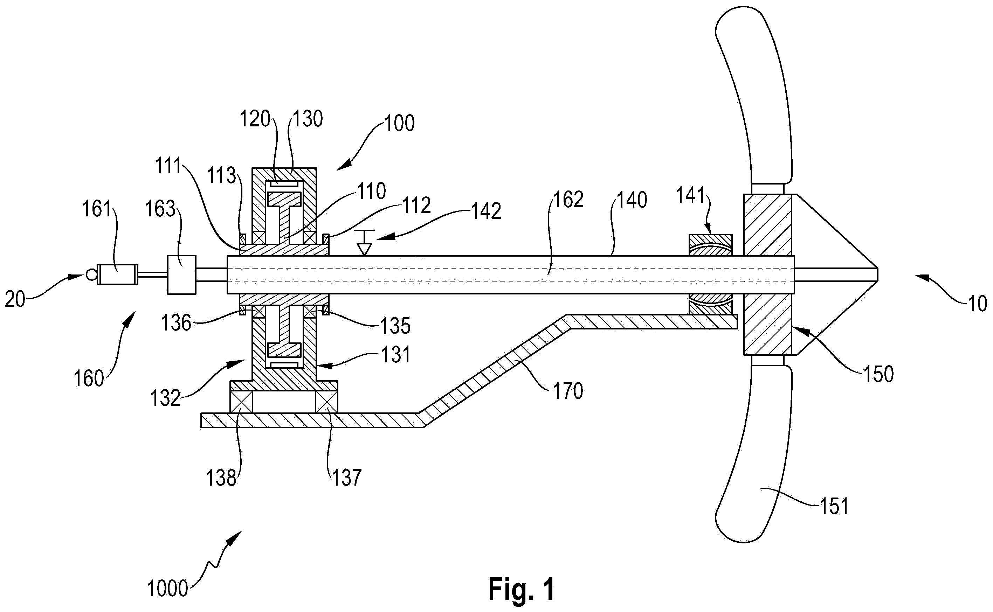

Im Folgenden wird zunächst auf Fig. 1 Bezug genommen, die eine schematische Querschnittsansicht einer Windkraftanlage 1000 gemäss der vorliegenden Erfindung zeigt. Der Turm und die Gondel der Windkraftanlage 1000 sind in den Figuren nicht dargestellt.

Zu Beschreibungszwecken ist in Fig. 1 ein vorderer Bereich (Vorderseite 10) und ein hinterer Bereich (Rückseite 20) definiert. Diese Richtungsangaben werden durch die gesamte Beschreibung hindurch und auch zur Beschreibung einzelner Komponenten verwendet, deren Gesamtanordnung aus Fig. 1 hervorgeht. Der vordere Bereich (Vorderseite 10) ist in Fig. 1 rechts und der hintere Bereich (Rückseite 20) ist in Fig.1 links angeordnet. Entsprechend ist ein oberer Bereich in der Fig. 1 als oben und ein unterer Bereich in der Fig.1 als unten definiert. Als Axialrichtung ist die Richtung der Drehachse der Windkraftanlage 1000 definiert. Die Axialrichtung ist in Fig. 1 eine horizontale Richtung.

In dem vorderen Bereich weist die Windkraftanlage 1000 einen Rotorkopf 150 auf. Der Rotorkopf 150 trägt die Rotorblätter 151. Typischerweise sind drei Rotorblätter 151 an dem Rotorkopf 150 angeordnet. Der Rotorkopf 150 ist als Nabe so ausgebildet, dass dieser auf eine Welle geschoben bzw. gesetzt werden kann.

Hier ist der Rotorkopf 150 auf eine Hauptwelle 140 geschoben bzw. gesetzt. Entsprechend kann eine Rotation des mittels der Rotorblätter 151 in Bewegung versetzten Rotorkopfes 150 auf die Hauptwelle 140 übertragen werden. Die Hauptwelle 140 erstreckt sich in Axialrichtung bzw. in horizontaler Richtung.

Da sich die Hauptwelle 140 relativ zu anderen Bauteilen der Windkraftanlage 1000 (Gehäuse, Gondel,...) dreht, muss diese entsprechend gelagert werden. Hierzu weist die Windkraftanlage 1000 als erste Lagerstelle zunächst ein vorderes Hauptwellen-Lager 141 auf. Das vordere Hauptwellen-Lager 141 ist in der Nähe des Rotorkopfes 150 ausgebildet. Das heisst, dass das Hauptwellen-Lager 141 in dem vorderen Bereich, also nahe der Vorderseite 10, angeordnet ist.

Das Hauptwellen-Lager 141 ist als Festlager ausgebildet und kann folglich Radialkräfte und Axialkräfte aufnehmen. Hier ist das Hauptwellen-Lager 141 als Pendellager dargestellt und ausgebildet.

Die Windkraftanlage 1000 weist, wie in Fig. 1 ebenfalls zu erkennen, ferner einen Generator 100 auf. Dabei ist, wie bereits erwähnt, die zweite Lagerstelle der Hauptwelle 140 gemeinsam mit der Lagerung des Generators 100 umgesetzt.

Der Generator 100 weist einen Generatorrotor 110 und einen Generatorstator 120 auf. Der Generatorrotor 110 ist auf der Hauptwelle 140 angeordnet. Genauer gesagt weist der Generatorrotor 110 einen Basisbereich 111 auf, der auf der Hauptwelle 140 angeordnet ist.

Der Basisbereich 111 ist hohlzylinderförmig ausgebildet und weist eine Innenumfangsfläche und eine Aussenumfangsfläche auf. Mit der Innenumfangsfläche ist der Basisbereich 111 auf der Aussenumfangsfläche der Hauptwelle 140 angeordnet. Die Innenumfangsfläche des Basisbereichs 111 und die Aussenumfangsfläche der Hauptwelle 140 sind so zueinander ausgebildet, dass eine Rotation der Hauptwelle 140 auf den Basisbereich 111 und somit auf den Generatorrotor 110 übertragen werden kann. Diese Wellen-Nabe-Verbindung zur Übertragung der Rotation kann hierbei von kraftschlüssiger Art (beispielsweise mittels Klemmelementen; Spannelementen; Kegeln) oder formschlüssiger Art (beispielweise mittels Passfedern; Verstiftungen; Mehrkantprofilen; Verzahnungen) ausgebildet sein.

Wie in Fig. 1 zu erkennen, weist der Generator 100 ferner eine vordere Generatorrotor-Befestigungseinrichtung 112 und eine hintere Generatorrotor-Befestigungseinrichtung 113 auf. Die beiden Generatorrotor-Befestigungseinrichtungen 112 und 113 dienen dazu, den Generatorrotor 110 sicher an der Hauptwelle 140 zu befestigen. Vorzugsweise handelt es sich bei den Generatorrotor-Befestigungseinrichtungen 112 und 113 um Klemmringe. Diese haben insbesondere den Vorteil, dass eine schnelle und einfache Montage und Demontage ermöglicht wird.

Die vordere Generatorrotor-Befestigungseinrichtung 112 ist an einem vorderen axialen Endbereich des Basisbereichs 111 angeordnet, also zu der Vorderseite 10 hin. Die hintere Generatorrotor-Befestigungseinrichtung 113 ist an einem entgegengesetzten Endbereich, also einem hinteren axialen Endbereich des Basisbereichs 111 angeordnet, also zu der Rückseite 20 hin.

Der Generatorrotor 110 erstreckt sich von dem Basisbereich 111 aus radial nach aussen. Insbesondere erstreckt sich der Generatorrotor 110 an einem Bereich radial nach aussen, der in Axialrichtung (Rotationsachse) gesehen zwischen der hinteren Generatorrotor-Befestigungseinrichtung 113 und der vorderen Generatorrotor-Befestigungseinrichtung 112 angeordnet ist. Vorzugsweise ist dieser Bereich in Axialrichtung gesehen zentral an dem Basisbereich 111 angeordnet.

Vorzugsweise sind der Generatorrotor 110 und der Basisbereich 111 einteilig ausgebildet. Der sich radial nach aussen erstreckende Teil des Generatorrotors 110 ist, wie in Fig. 1 zu sehen, von einem Generatorgehäuse 130 umgeben. An dem Generatorgehäuse 130 ist ferner der Generatorstator 120 angeordnet. Das bedeutet, dass das Generatorgehäuse 130 zunächst dazu dient, den Generatorstator 120 zu tragen. Auch wenn hier Generatorstator 120 und Generatorgehäuse 130 als zwei unterschiedliche Bauteile beschrieben sind, können diese auch einteilig ausgebildet sein.

Wie in Fig. 1 zu erkennen, ist der Generatorstator 120 an einer Innenseite (Seite die zu einem Gehäuseinneren zeigt) des Generatorgehäuses 130 angebracht. Insbesondere ist der Generatorstator 120 innen an einem radialen Endbereich des Generatorgehäuses 130 angeordnet. Somit ist auch der Generatorstator 120 von dem Generatorgehäuse 130 umgeben und geschützt.

Das Generatorgehäuse 130 kann an einer Aussenseite (Seite die nach aussen zeigt) eine Vielzahl von Kühlrippen aufweisen, die dazu dienen, den Generator 100 zu kühlen. Diese sind in den Figuren allerdings nicht dargestellt.

Das Generatorgehäuse 130 weist eine Vorderseite 131 und eine Rückseite 132 auf. Die Vorderseite 131 des Generatorgehäuses 130 zeigt zu der Vorderseite 10 hin. Die Rückseite 132 des Generatorgehäuses 130 zeigt zu der Rückseite 20 hin. An der Vorderseite 131 des Generatorgehäuses 130 ist ein vorderes Generatorlager 135 angeordnet. An der Rückseite 132 des Generatorgehäuses 130 ist ein hinteres Generatorlager 136 angeordnet. Das heißt, dass das Generatorgehäuse 130 mittels zwei Generatorlagern 135 und 136 gelagert ist. Wie in Fig. 1 angedeutet, sind die Generatorlager 135 und 136 als Loslager ausgebildet. Die Generatorlager 135 und 136 sind zumindest im Wesentlichen ringförmig ausgebildet.

Wie ebenfalls in Fig. 1 dargestellt, sitzen die Generatorlager 135 und 136 auf dem hohlzylinderförmigen Basisbereich 111 des Generatorrotors 110 auf. Das heisst, dass eine Innenumfangsfläche der Generatorlager 135 und 136 mit der Aussenumfangsfläche des hohlzylinderförmigen Basisbereichs 111 in Kontakt steht.

Ferner steht eine Aussenumfangsfläche der Generatorlager 135 und 136 mit dem Generatorgehäuse 130 in Kontakt. Genauer gesagt sitzt das vordere Generatorlager 135 in der Vorderseite 131 des Generatorgehäuses 130 und das hintere Generatorlager 136 sitzt in der Rückseite 132 des Generatorgehäuses 130.

Die Hauptwelle 140 ist folglich über den Generatorrotor 110 an dem Generatorgehäuse 130 gelagert. Das bedeutet also, dass die Hauptwelle 140 nicht unmittelbar über die Generatorlager 135 und 136, sondern mittelbar über den Generatorrotor 110 gelagert ist.

Wie in Figur 1 zu erkennen, ist der Basisbereich 111 des Generatorrotors 110 in Axialrichtung länger ausgebildet als der Abstand zwischen dem vorderen Generatorlager 135 und dem hinteren Generatorlager 136 in Axialrichtung.

Von der Vorderseite 10 zu der Rückseite 20 gesehen ist zunächst die vordere Generatorrotor-Befestigungseinrichtung 112, dann das vordere Generatorlager 135, dann der sich radial nach außen erstreckende Teil des Generatorrotors 110, dann das hintere Generatorlager 136 und dann die hintere Generatorrotor-Befestigungseinrichtung 113 auf dem Basisbereich 111 angeordnet.

Das bedeutet, dass sämtliche der vorgenannten Elemente nicht direkt auf der Hauptwelle 140, sondern auf dem Generatorrotor 110, genauer dem Basisbereich 111 hiervon, angeordnet sind.

Entsprechend können diese gemeinsam mit dem Generatorrotor 110 von der Hauptwelle 140 gezogen werden und müssen nicht einzeln abmontiert werden.

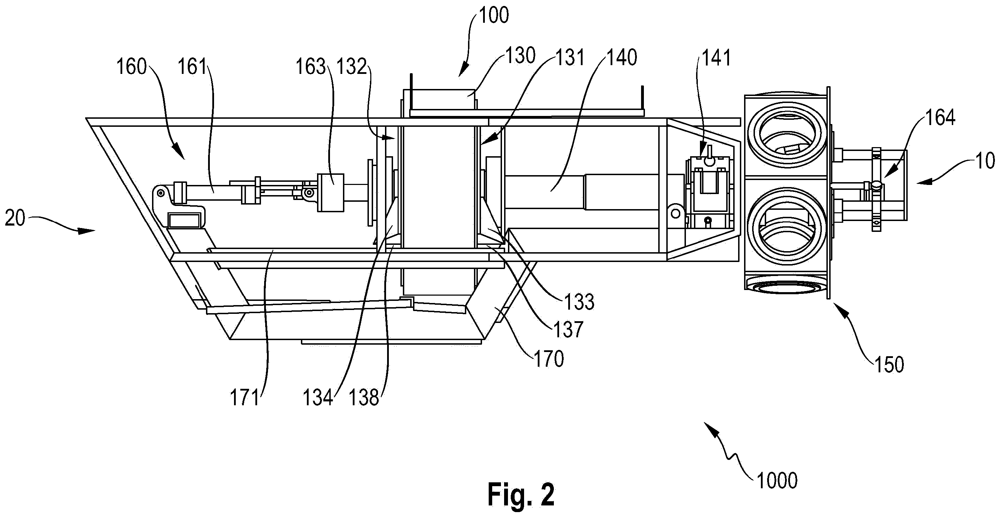

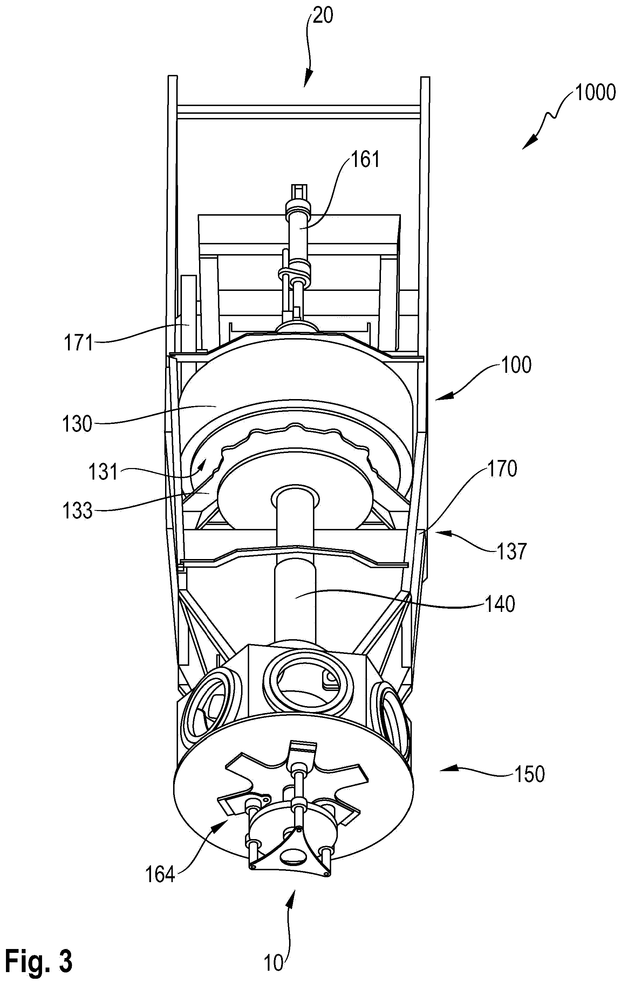

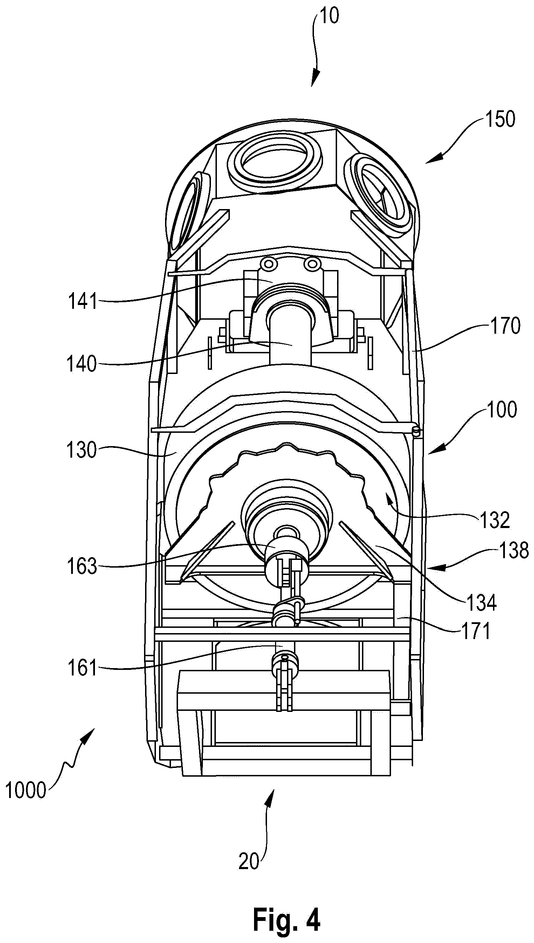

Wie besser in Fig. 2 zu erkennen, weist der Generator 100 ferner eine vordere Generatorgehäuse-Befestigungseinrichtung 133 und eine hintere Generatorgehäuse-Befestigungseinrichtung 134 auf. Besonders gut zu erkennen ist die vordere Generatorgehäuse-Befestigungseinrichtung 133 in Fig. 3 und die hintere Generatorgehäuse-Befestigungseinrichtung 134 in Fig. 4.

Die Generatorgehäuse-Befestigungseinrichtungen 133 und 134 verbinden das Generatorgehäuse 130 mit einem Gehäuse 170 der Windkraftanlage 1000. Wie insbesondere in den Fig. 2 bis 4 zu erkennen, weist das Gehäuse 170 eine Käfigstruktur auf. Das Gehäuse 170 ist hierbei aus mehreren Stäben käfigartig bzw. gerüstartig aufgebaut. Das Gehäuse 170 dient auch dazu, die Hauptwelle 140 und den Generator 110 in einem zusammengesetzten Bauteil anzuordnen, das dann wiederum an einer Gondel der Windkraftanlage 1000 angebracht werden kann.

Somit hat das Gehäuse 170 die Aufgabe, die einzelnen Bauteile (beispielsweise Generator 110, vorderes Hauptwellen-Lager 141 und Hauptwelle 140) relativ zueinander anzuordnen. Hierzu kann das Gehäuse 170, wie insbesondere unter dem vorderen Hauptwellen-Lager 141 in Fig. 4 zu erkennen, ferner eine oder mehrere Basisplatten aufweisen, auf denen die Bauteile angeordnet sind (hier das vordere Hauptwellen-Lager 141).

Insbesondere verbinden die Generatorgehäuse-Befestigungseinrichtungen 133 und 134 das Generatorgehäuse 130 über Auflagereinrichtungen 137 und 138 mit dem Gehäuse 170 der Windkraftanlage 1000. Die Auflagereinrichtungen 137 und 138 sind also zwischen dem Gehäuse 170 und den Generatorgehäuse-Befestigungseinrichtungen 133 und 134 angeordnet. Allgemeiner formuliert sind die Auflagereinrichtungen 137 und 138 zwischen dem Gehäuse 170 und dem Generatorgehäuse 130 angeordnet (siehe schematische Darstellung in Fig. 1). Die Auflagereinrichtungen 137 und 138 sind vorzugsweise als Elastomerlager ausgebildet.

Wie in den Figuren gezeigt, sind eine vordere Auflagereinrichtung 137 und eine hintere Auflagereinrichtung 138 angeordnet. Die vordere Auflagereinrichtung 137 ist hierbei mit der vorderen Generatorgehäuse-Befestigungseinrichtung 133 verbunden und die hintere Auflagereinrichtung 138 ist mit der hinteren Generatorgehäuse-Befestigungseinrichtung 134 verbunden. Das bedeutet auch, dass die vordere Auflagereinrichtung 137 in Axialrichtung gesehen vor (also zu der Vorderseite 10 hin) dem Generatorgehäuse 130 angeordnet werden kann. Entsprechend kann auch die hintere Auflagereinrichtung 138 in Axialrichtung gesehen hinter (also zu der Rückseite 20 hin) dem Generatorgehäuse 130 angeordnet werden. Hierdurch wird ein besonders zuverlässiges Halten des Generators 100 ermöglicht. Außerdem kann ein ausgeglichener Kraftfluss erfolgen.

Grundsätzlich verläuft der Kraftfluss von der Hauptwelle 140 zu dem Basisbereich 111 des Generatorrotors 100, zu dem vorderen bzw. hinteren Generatorlager 135 bzw. 136, zu dem Generatorgehäuse 130 bzw. einer Vorderseite 131 oder einer Rückseite 132 hiervon. Weiter verläuft der Kraftfluss zu der vorderen bzw. hinteren Generatorgehäuse-Befestigungseinrichtung 133 bzw. 134 und dann weiter zu der vorderen bzw. hinteren Auflagereinrichtung 137 bzw. 138. Von hier aus verläuft der Kraftfluss dann zu dem Gehäuse 170.

Wie insbesondere in Fig. 4 zu erkennen, ist die hintere Generatorgehäuse-Befestigungseinrichtung 134 so ausgebildet, dass diese sich von dem Generatorgehäuse 130 aus gesehen nach außen erstreckt. Mit anderen Worten erstreckt sich diese zu den beiden Längsseiten des Gehäuses 170 hin. Dabei werden als Längsseiten die langen Seiten des Gehäuses 170 verstanden, die sich von der Vorderseite 10 zu der Rückseite 20 erstrecken. Die Befestigungseinrichtung 134 erstreckt sich somit zu einer ersten Längsseite und einer zweiten Längsseite des Gehäuses 170 hin (in Fig. 4 nach links und nach rechts).

Es können somit auch mehrere hintere Auflagereinrichtungen 138 angeordnet sein. Bevorzugt ist an jeder Längsseite des Gehäuses 170 zumindest eine hintere Auflagereinrichtung 138 angeordnet.

Das Gleiche gilt auch für die vordere Generatorgehäuse-Befestigungseinrichtung 133, so dass auch mehrere vordere Auflagereinrichtungen 137 angeordnet sein können. Insbesondere können zwei vordere Auflagereinrichtungen 137 angeordnet sein, die an den beiden Längsseiten des Gehäuses 170 angeordnet sind.

Besonders bevorzugt sind vier Auflagereinrichtungen 137, 138 angeordnet, die um das Generatorgehäuse 130 herum angeordnet sind. Dabei sind zwei vordere Auflagereinrichtungen 137 (links und rechts) vor dem Generatorgehäuse 130 und zwei hintere Auflagereinrichtungen 138 (links und rechts) hinter dem Generatorgehäuse 130 angeordnet.

Wie in den Figuren zu erkennen, weist die Windkraftanlage 1000 ferner eine Pitcheinrichtung 160 auf. Die Pitcheinrichtung 160 weist, wie in Fig. 3 zu erkennen, eine Pitchverstellung 164 auf, die an der Vorderseite 10 der Windkraftanlage 1000 angeordnet ist. Diese dient dazu, die Neigung der Rotorblätter 151 zu verstellen. Die Pitchverstellung 164 ist über eine Pitchstange 162 mit einem Pitchzylinder 161 verbunden. Der Pitchzylinder 161 dient dazu, die Pitchverstellung 164 anzusteuern.

Der Pitchzylinder 161 ist zusammen mit einer Drehführung 163, wie insbesondere in Fig. 4 zu erkennen, an der Rückseite 20 der Windkraftanlage 1000 angeordnet.

Die Pitchstange 162 verläuft, wie in Fig. 1 zu erkennen, durch die Hauptwelle 140 hindurch. Daher ist die Hauptwelle 140 als Hohlwelle ausgebildet. Die Pitchstange 162 ist ferner so stabil ausgebildet, dass diese den Rotorkopf 150 und die Hauptwelle 140 trägt, sollte die Hauptwelle 140 brechen.

Die Demontage des Generators 110 ist besonders gut in Figur 4 nachzuvollziehen. Dabei wird zunächst der Pitchzylinder 161 (und die Drehführung 163) entfernt. Anschließend wird die vordere Generatorrotor-Befestigungseinrichtung 112, die hintere Generatorrotor-Befestigungseinrichtung 113, die zumindest eine vordere Auflagereinrichtung 137 und die zumindest eine hintere Auflagereinrichtung 138 gelöst.

Dann wird eine in Fig. 1 angedeutete Hauptwellen-Halterung 142 aktiviert. Wenn der Generator 110 von der Hauptwelle 140 demontiert wird, ohne die Hauptwellen-Halterung 142 zu aktivieren, wird ein hinterer Bereich (zur Rückseite 20 hin) der Hauptwelle 140 nicht mehr gehalten. Durch das Gewicht des Rotorkopfes 150 und der Rotorblätter 151 würde dann die Hauptwelle 140 nach vorne kippen. Um dies zu verhindern, ist die Hauptwellen-Halterung 142 angeordnet.

Wenn die Hauptwellen-Halterung 142 aktiviert ist und die Hauptwelle 140 in ihrer Position hält, kann der Generator 110 von der Hauptwelle 140 geschoben bzw. gezogen werden. Um diesen Vorgang zu vereinfachen, weist das Gehäuse 170 eine Gehäuse-Schiene 171 (siehe beispielsweise Fig. 4) auf, auf der der Generator 110 von der Hauptwelle 140 gezogen werden kann. Der Generator 110 ist also weiterhin abgestützt und kann kontrolliert bewegt werden.

Insgesamt liefern der dargestellte Generator 110 und die dargestellte Windkraftanlage 1000 Verbesserungen, die sich auf die Herstellung, Montage, Wartung und Instandhaltung positiv auswirken.

## Patentansprüche

1. Direktangetriebene Windkraftanlage (1000), die Folgendes aufweist:
- einen Generator (100);
- eine Hauptwelle (140), die eine Drehung eines Rotorkopfes (150) zu dem Generator (100) überträgt; und
- ein Gehäuse (170), an dem die Hauptwelle (140) und der Generator (110) gelagert sind, und
- ferner ein vorderes Hauptwellen-Lager (141) aufweist, das benachbart zu dem Rotorkopf (150) angeordnet ist und dazu ausgebildet ist, die Hauptwelle (140) an dem Gehäuse (170) zu lagern;
- wobei der Generator (100) dazu ausgebildet ist, Bewegungsenergie der Hauptwelle (140) der Windkraftanlage (1000) in elektrische Energie umzuwandeln,
- wobei der Generator (100) einen mit der Hauptwelle (140) der Windkraftanlage (1000) verbundenen Generatorrotor (110) und einen Generatorstator (120) aufweist,
- wobei der Generator (100) ein Generatorgehäuse (130) aufweist, an dem der Generatorstator (120) angeordnet ist,
- wobei das Generatorgehäuse (130) eine Vorderseite (131), die in einem eingebauten Zustand des Generators (100) zu einem Rotorkopf (150) der Windkraftanlage (1000) hin zeigt, und eine Rückseite (132) aufweist, die in dem eingebauten Zustand des Generators (100) von dem Rotorkopf (150) weg zeigt,
- wobei der Generator (100) ferner zumindest ein vorderes Generatorlager (135), das an der Vorderseite (131) des Generatorgehäuses (130) angeordnet ist, und ein hinteres Generatorlager (136) aufweist, das an der Rückseite (132) des Generatorgehäuses (130) angeordnet ist,
- wobei das vordere und das hintere Generatorlager (135, 136) dazu ausgebildet sind, die Hauptwelle (140) in dem eingebauten Zustand des Generators (100) an dem Generatorgehäuse (130) zu lagern,
- wobei das vordere und das hintere Generatorlager (135, 136) als Loslager ausgebildet sind und gemeinsam ein hinteres Hauptlager der Hauptwelle bilden, und wobei
- die Hauptwelle (140) über das vordere Hauptwellen-Lager (141) gelagert ist und wobei das vordere Hauptwellen-Lager (141) als Festlager ausgebildet ist, und
- wobei der Generator (100) mindestens eine Auflagereinrichtung (137, 138) aufweist, die dazu ausgebildet ist, das Generatorgehäuse (130) in dem eingebauten Zustand an einem Gehäuse (170) der Windkraftanlage (1000) abzustützen.

2. Direktangetriebene Windkraftanlage (1000) gemäss Anspruch 1, wobei der Generatorrotor (110) einen hohlzylinderförmigen Basisbereich (111) aufweist, der eine Innenumfangsfläche und eine Aussenumfangsfläche aufweist.

3. Direktangetriebene Windkraftanlage (1000)gemäss Anspruch 2, wobei der Generatorrotor (110) einteilig mit dem hohlzylinderförmigen Basisbereich (111) ausgebildet ist.

4. Direktangetriebene Windkraftanlage (1000)gemäss Anspruch 2 oder 3, wobei eine Innenumfangsfläche des vorderen Generatorlagers (135) und eine Innenumfangsfläche des hinteren Generatorlagers (136) mit der Aussenumfangsfläche des hohlzylinderförmigen Basisbereichs (111) in Kontakt kommen.

5. Direktangetriebene Windkraftanlage (1000)gemäss einem der Ansprüche 2 bis 4, wobei der Generator (100) ferner eine vordere Generatorrotor-Befestigungseinrichtung (112) und eine hintere Generatorrotor-Befestigungseinrichtung (113) aufweist, die an axialen Endbereichen des hohlzylinderförmigen Basisbereichs (111) angeordnet sind.

6. Direktangetriebene Windkraftanlage (1000) gemäss Anspruch 5, wobei die vordere Generatorrotor-Befestigungseinrichtung (112) und die hintere Generatorrotor-Befestigungseinrichtung (113) als Klemmeinrichtungen ausgebildet sind.

7. Direktangetriebene Windkraftanlage (1000) gemäss einem der vorherigen Ansprüche, wobei die mindestens eine Auflagereinrichtung (137, 138) ein Elastomerlager ist.

8. Direktangetriebene Windkraftanlage (1000) gemäss einem der vorherigen Ansprüche, wobei an der Vorderseite (131) des Generatorgehäuses (130) eine vordere Auflagereinrichtung (137) und an der Rückseite (132) des Generatorgehäuses (130) eine hintere Auflagereinrichtung (138) angeordnet ist.

9. Direktangetriebene Windkraftanlage (1000) gemäss Anspruch 8, wobei die vordere Auflagereinrichtung (137) über eine vordere Generatorgehäuse-Befestigungseinrichtung (133) mit der Vorderseite (131) des Generatorgehäuses (130) verbunden ist, und
wobei die hintere Auflagereinrichtung (138) über eine hintere Generatorgehäuse-Befestigungseinrichtung (134) mit der Rückseite (132) des Generatorgehäuses (130) verbunden ist.

10. Direktangetriebene Windkraftanlage (1000) gemäss einem der Ansprüche 1 bis 9, wobei die Windkraftanlage (1000) ferner eine Hauptwellen-Halterung (142) aufweist, die dazu ausgebildet ist, die Hauptwelle (140) in ihrer Position zu halten, wenn der Generator (100) demontiert wird.

11. Direktangetriebene Windkraftanlage (1000) gemäss einem der Ansprüche 1 bis 10, wobei die Hauptwelle (140) als Hohlwelle ausgebildet ist.

12. Direktangetriebene Windkraftanlage (1000) gemäss einem der Ansprüche 1 bis 11, wobei die Windkraftanlage (140) eine Pitcheinrichtung (160) aufweist.

13. Direktangetriebene Windkraftanlage (1000) gemäss Anspruch 11 und 12, wobei die Pitcheinrichtung (160) einen Pitchzylinder (161), eine Pitchstange (162) und eine Pitchverstellung (164) aufweist, wobei die Pitchverstellung (164) benachbart zu dem Rotorkopf (150) angeordnet ist und mittels des Pitchzylinders (161) ansteuerbar ist, und wobei die Pitchstange (162) den Pitchzylinder (161) durch die als Hohlwelle ausgebildete Hauptwelle (140) hindurch mit der Pitchverstellung (164) verbindet.

14. Verfahren zum Demontieren eines Generators (100) von einer Hauptwelle (140) einer direktangetriebenen Windkraftanlage (100) nach einem der Ansprüche 1 bis 13, das folgende Schritte aufweist:
- Lösen einer vorderen Generatorrotor-Befestigungseinrichtung (112) und einer hinteren Generatorrotor-Befestigungseinrichtung (113);
- Lösen von zumindest einer Auflagereinrichtung (137, 138), vorzugsweise mehrerer Auflagereinrichtungen (137, 138); und
- Herunterschieben des Generators (100) von der Hauptwelle (140).

15. Verfahren zum Demontieren eines Generators (100) gemäss Anspruch 14, wobei das Verfahren ferner folgenden Schritt aufweist:
- Aktivieren einer Hauptwellen-Halterung (142)

## Claims

1. Direct driven wind turbine (1000) which comprises the following:
- a generator (100);
- a main shaft (140) which transmits rotation of a rotor head (150) to the generator (100); and
- a housing (170) on which the main shaft (140) and the generator (110) are supported;
- further comprising a forward main shaft bearing (141) which is arranged adjacent to the rotor head (150) and which is configured to support the main shaft (140) on the housing (170); wherein
- the generator (100) is configured to convert kinetic energy of a main shaft (140) of the wind turbine (1000) into electrical energy,
- whereby the generator (100) comprises a generator rotor (110) connectable to the main shaft (140) of the wind turbine (1000) and a generator stator (120),
- whereby the generator (100) comprises a generator housing (130) on which the generator stator (120) is arranged,
- whereby the generator housing (130) comprises a front side (131) facing towards a rotor head (150) of the wind turbine (1000) in an installed state of the generator (100) and a rear side (132) facing away from the rotor head (150) in the installed state of the generator (100),
- whereby the generator (100) further comprises at least one front generator bearing (135) arranged at the front (131) of the generator housing (130) and a rear generator bearing (136) arranged at the rear (132) of the generator housing (130),
- whereby the front and the rear generator bearings (135, 136) are configured to support the main shaft (140) on the generator housing (130) in the installed state of the generator (100),
- whereby the front and the rear generator bearing (135, 136) are configured as floating bearings together form a rear main shaft bearing, and wherein
- the main shaft (140) is supported by the front main shaft bearing (141) and wherein the front main shaft bearing (141) is configured as a fixed bearing, and
- whereby the generator (100) comprises at least one support device (137, 138) which is configured to support the generator housing (130) on a housing (170) of the wind turbine (1000) in the installed state.

2. Direct driven wind turbine (1000) according to claim 1,
whereby the generator rotor (110) comprises a hollow cylindrical base portion (111) comprising an inner peripheral surface and an outer peripheral surface.

3. Direct driven wind turbine (1000) according to claim 2,
whereby the generator rotor (110) is formed in one piece with the hollow cylindrical base portion (111).

4. Direct driven wind turbine (1000) according to claim 2 or 3,
whereby an inner peripheral surface of the front generator bearing (135) and an inner peripheral surface of the rear generator bearing (136) come into contact with the outer peripheral surface of the hollow cylindrical base portion (111).

5. Direct driven wind turbine (1000) according to one of the claims 2 to 4,
whereby the generator (100) further comprises a front generator rotor fastening device (112) and a rear generator rotor fastening device (113) which are arranged at axial end portions of the hollow cylindrical base portion (111).

6. Direct driven wind turbine (1000) according to claim 5,
whereby the front generator rotor fastening device (112) and the rear generator rotor fastening device (113) are configured as clamping devices.

7. Direct driven wind turbine (1000) according to one of the preceding claims,
whereby the at least one support device (137, 138) is an elastomeric bearing

8. Direct driven wind turbine (1000) according to one of the preceding claims,
whereby a front support device (137) is arranged at the frontside (131) of the generator housing (130) and a rear support device (138) is arranged at the rearside (132) of the generator housing (130).

9. Direct driven wind turbine (1000) according to claim 8,
wherein the front support device (137) is connected to the frontside (131) of the generator housing (130) via a front generator housing fastening device (133), and whereby the rear support device (138) is connected to the rearside (132) of the generator housing (130) via a rear generator housing fastening device (134).

10. Direct driven wind turbine (1000) according to one of the claims 1 to 9,
whereby the wind turbine (1000) further comprises a main shaft holder (142) configured to hold the main shaft (140) in its position when the generator (100) is disassembled.

11. Direct driven wind turbine (1000) according to one of the claims 1 to 10,
whereby the main shaft (140) is configured as a hollow shaft.

12. Direct driven wind turbine (1000) according to one of the claims 1 to 11,
whereby the wind turbine (1000) comprises a pitch device (160).

13. Direct driven wind turbine (1000) according to claim 1 and 12,
whereby the pitch device (160) comprises a pitch cylinder (161), a pitch rod (162) and a pitch adjustment (164), whereby the pitch adjustment (164) is arranged adjacent to the rotor head (150) and can be controlled by means of the pitch cylinder (161), and whereby the pitch rod (162) connects the pitch cylinder (161) with the pitch adjustment (164) through the main shaft (140), which is configured as a hollow shaft.

14. Method for disassembling a generator (100) from a main shaft (140) of a direct driven wind turbine (100) according to one of claims 1 to 13 comprising the following steps:
- loosening a front generator rotor fastening device (112) and a rear generator rotor fastening device (113);
- loosening at least one support device (137, 138), preferably several support devices (137, 138); and
- sliding down the generator (100) from the main shaft (140).

15. Method for disassembling a generator (100) according to claim 14, whereby the method further comprises the step of:
- activating a main shaft holder (142).

## Revendications

1. Éolienne à entraînement direct (1000) comprenant :
- un générateur (100) ;
- un arbre principal (140) qui transmet la rotation d'une tête de rotor (150) au générateur (100) ; et
- un carter (170) dans lequel l'arbre principal (140) et le générateur (110) sont montés, et
- comprenant en outre un palier d'arbre principal avant (141) disposé de manière adjacente à la tête de rotor (150) et configuré pour supporter l'arbre principal (140) sur le carter (170) ;
- dans laquelle le générateur (100) est configuré pour convertir l'énergie motrice de l'arbre principal (140) de l'éolienne (1000) en énergie électrique,
- dans laquelle le générateur (100) comprend un rotor de générateur (110) relié à l'arbre principal (140) de l'éolienne (1000) et un stator de générateur (120),
- dans laquelle le générateur (100) comprend un boîtier de générateur (130) sur lequel le stator de générateur (120) est disposé,
- dans laquelle le boîtier de générateur (130) comprend un côté avant (131) qui fait face à une tête de rotor (150) de l'éolienne (1000) lorsque le générateur (100) est à l'état monté, ainsi qu'un côté arrière (132) qui est tourné à l'opposé de la tête de rotor (150) lorsque le générateur (100) est à l'état monté,
- dans laquelle le générateur (100) comprend en outre au moins un palier de générateur avant (135) disposé sur le côté avant (131) du boîtier de générateur (130) et un palier de générateur arrière (136) disposé sur le côté arrière (132) du boîtier de générateur (130),
- dans laquelle les paliers de générateur avant et arrière (135, 136) sont configurés de manière à supporter l'arbre principal (140) sur le boîtier de générateur (130) lorsque le générateur (100) est à l'état monté,
- dans laquelle les paliers de générateur avant et arrière (135, 136) sont configurés sous forme de paliers libres et forment ensemble un palier principal arrière de l'arbre principal, et dans lequel
- l'arbre principal (140) est supporté par le palier d'arbre principal avant (141) et dans laquelle le palier d'arbre principal avant (141) est configuré sous forme de palier fixe, et
- dans laquelle le générateur (100) comprend au moins un dispositif de support (137, 138) qui est configuré pour supporter le boîtier de générateur (130) sur un carter (170) de l'éolienne (1000) lorsqu'il est à l'état monté.

2. Éolienne à entraînement direct (1000) selon la revendication 1, dans laquelle le rotor de générateur (110) comprend une partie de base en forme de cylindre creux (111) qui présente une surface périphérique intérieure et une surface périphérique extérieure.

3. Éolienne à entraînement direct (1000) selon la revendication 2, dans laquelle le rotor de générateur (110) est formé d'un seul tenant avec la partie de base en forme de cylindre creux (111).

4. Éolienne à entraînement direct (1000) selon la revendication 2 ou 3, dans laquelle une surface périphérique intérieure du palier de générateur avant (135) et une surface périphérique intérieure du palier de générateur arrière (136) viennent en contact avec la surface périphérique extérieure de la partie de base en forme de cylindre creux (111).

5. Éolienne à entraînement direct (1000) selon l'une des revendications 2 à 4, dans laquelle le générateur (100) comprend en outre un dispositif de fixation de rotor de générateur avant (112) et un dispositif de fixation de rotor de générateur arrière (113) disposés au niveau de parties d'extrémité axiales de la partie de base en forme de cylindre creux (111).

6. Éolienne à entraînement direct (1000) selon la revendication 5, dans laquelle le dispositif de fixation de rotor de générateur avant (112) et le dispositif de fixation de rotor de générateur arrière (113) sont configurés sous forme de dispositifs de serrage.

7. Éolienne à entraînement direct (1000) selon l'une des revendications précédentes, dans laquelle l'au moins un dispositif de support (137, 138) est un palier élastomère.

8. Éolienne à entraînement direct (1000) selon l'une des revendications précédentes, dans laquelle un dispositif de support avant (137) est disposé sur le côté avant (131) du boîtier de générateur (130) et un dispositif de support arrière (138) est disposé sur le côté arrière (132) du boîtier de générateur (130).

9. Éolienne à entraînement direct (1000) selon la revendication 8, dans laquelle le dispositif de support avant (137) est relié au côté avant (131) du boîtier de générateur (130) par l'intermédiaire d'un dispositif de fixation de boîtier de générateur avant (133), et
dans laquelle le dispositif de support arrière (138) est relié au côté arrière (132) du boîtier de générateur (130) par l'intermédiaire d'un dispositif de fixation de boîtier de générateur arrière (134).

10. Éolienne à entraînement direct (1000) selon l'une des revendications 1 à 9, dans laquelle l'éolienne (1000) comprend en outre un support d'arbre principal (142) qui est configuré de manière à maintenir l'arbre principal (140) dans sa position lorsque le générateur (100) est démonté.

11. Éolienne à entraînement direct (1000) selon l'une des revendications 1 à 10, dans laquelle l'arbre principal (140) est configuré sous forme d'arbre creux.

12. Éolienne à entraînement direct (1000) selon l'une des revendications 1 à 11, dans laquelle l'éolienne (140) comprend un dispositif de pas (160).

13. Éolienne à entraînement direct (1000) selon les revendications 11 et 12, dans laquelle le dispositif de pas (160) comprend un cylindre de pas (161), une tige de pas (162) et un dispositif de réglage de pas (164), dans laquelle le dispositif de réglage de pas (164) est disposé de manière adjacente à la tête de rotor (150) et est configuré de manière à pouvoir être commandé au moyen du cylindre de pas (161), et dans laquelle la barre de pas (162) relie le cylindre de pas (161) au dispositif de réglage de pas (164) à travers l'arbre principal (140) configuré sous forme d'arbre creux.

14. Procédé de démontage d'un générateur (100) d'un arbre principal (140) d'une éolienne à entraînement direct (100) selon l'une des revendications 1 à 13, comprenant les étapes suivantes :
- détacher un dispositif de fixation de rotor de générateur avant (112) et un dispositif de fixation de rotor de générateur arrière (113) ;
- détacher au moins un dispositif de support (137, 138), de préférence une pluralité de dispositifs de support (137, 138) ; et
- faire glisser le générateur (100) vers le bas à partir de l'arbre principal (140).

15. Procédé de démontage d'un générateur (100) selon la revendication 14, dans lequel le procédé comprend en outre l'étape suivante :
- activer un support d'arbre principal (142).
